# EUROPEAN PATENT APPLICATION

(11) **EP 4 815 340 A1**
(43) Date of publication of application: **30.09.2026**
(21) Application number: 25166964.4
(22) Date of filing: 28.03.2025
(51) Int. Cl.: H04B 10/2507, H04B 10/66, H04B 10/69

(54) **APPARATUS AND METHOD FOR POLARIZATION SENSING**

(71) Applicant: Nokia Solutions and Networks Oy, 02610 Espoo (FI)
(72) Inventor: BREYNE, Laurens, 2918 Antwerp (BE); VERPLAETSTE, Michiel, 2018 Antwerp (BE)
(74) Representative: Zinsinger, Norbert

(57) **Abstract**

The present invention discloses an apparatus An apparatus (200, 201, 202, 203, 204, 205, 206) for use by an optical receiver, comprising means for: splitting a received optical signal (E_{Rx}) onto two polarizations, thereby obtaining optical signals (E_{Rx,x}, E_{Rx,y}) on respective polarizations (x, y), obtaining electrical signals (iₓ, i_{y}) indicating an intensity of the optical signals on respective polarizations (x, y); obtaining a differential signal (V_{Rx,cm,} i_{x,avg}-i_{y,avg,} i_{b}) related to a difference (iₓ-i_{y}) between the electrical signals (iₓ, i_{y}); determining at least part of a state-of-polarization, SOP, of the received optical signal (E_{Rx}) based on the differential signal (V_{Rx,cm}, i_{x,avg}-i_{y,avg,} i_{b}); obtaining a sum signal (V_{Rx,diff}) related to an addition (iₓ+i_{y}) of the electrical signals (iₓ, i_{y}); providing the sum signal (V_{Rx,diff}) for further processing to obtain data embedded in the received optical signal, based on an intensity of the received optical signal (E_{Rx}).

## Description

### Field of the invention

Various example embodiments relate to communication technology, specifically to optical network.

### Background

Recently, discussions have started in ITU Q2 standardization on G.VHSP or very high speed PON, which will be the next-generation PON succeeding 50G PON and targeting data rates of 100G or 200G (and beyond). Next to the higher datarates, there is also an increased desire to use the PON network as a sensor. The sensing data can be used to detect if the network is threatened, e.g. if vibrations close to the fiber may signal imminent damage, but the sensing data can also be used to sense the environment and detect e.g. heavy traffic on nearby roads. Especially the polarization of the optical field is of interest, as this is a highly environmental sensitive parameter.

Currently, there are two potential candidate technologies being considered for G.VHSP:
- Intensity-Modulation/Direct Detection (IM/DD) either on a single wavelength or wavelength multiplexed (to increase the total datarate), on a single polarization or polarization multiplexed signal (to double the total datarate)
- Coherent communication over 1 or 2 polarizations of the optical carrier

Previous PON technologies (up to 50G PON) use IM/DD as is it a low-cost, low-complexity technology. However, IM/DD may not be able to reach the high data rates requested by G.VHSP over the full PON reach. Hence, coherent optical communication may be a solution offering much higher rates, allowing C-band operation again (instead of being limited to only the O-band as for >=50G PON technologies) and also allowing more sensing possibilities since the full optical field (including polarization) is received and decoded. However, the cost of coherent systems is a major drawback in a cost-sensitive field as PON.

IM/DD systems are of high interest, but cannot resolve polarization and are typically build to be polarization insensitive, i.e. the transmitters, optical components and receivers are insensitive of the polarization of the light.

Thus, there is a need to resolve the polarization of light in IM/DD systems, preferably with minimal impact on the system performance.

### Summary of the Invention

The invention is set out in the appended set of claims.

According to a first aspect of the invention, there is provided an apparatus for use by an optical receiver, comprising means for: splitting a received optical signal (E_{Rx}) onto two polarizations, thereby obtaining optical signals (E_{Rx,x}, E_{Rx,y}) on respective polarizations (x, y); obtaining electrical signals (iₓ, i_{y}) indicating an intensity of the optical signals on respective polarizations (x, y); obtaining a differential signal (V_{Rx,cm}, i_{x,avg-}i_{y,avg}, i_{b}) related to a difference (iₓ-i_{y}) between the electrical signals (iₓ, i_{y}); determining at least part of a state-of-polarization, SOP, of the received optical signal (E_{Rx}) based on the differential signal (V_{Rx,cm}, i_{x,avg-}i_{y,avg}, i_{b}); obtaining a sum signal (V_{Rx,diff}) related to an addition (iₓ+i_{y}) of the electrical signals (iₓ, i_{y}); providing the sum signal (V_{Rx,diff}) for further processing to obtain data embedded in the received optical signal, based on an intensity of the received optical signal (E_{Rx}).

According to a second aspect of the invention, there is provided a method, comprising splitting a received optical signal (E_{Rx}) onto two polarizations, thereby obtaining optical signals (E_{Rx,x}, E_{Rx,y}) on respective polarizations (x, y); obtaining electrical signals (iₓ, i_{y}) indicating an intensity of the optical signals on respective polarizations (x, y); obtaining a differential signal (V_{Rx,cm}, i_{x,avg-}i_{y,avg}, i_{b}) related to a difference (iₓ-i_{y}) between the electrical signals (iₓ, i_{y}); determining at least part of a state-of-polarization, SOP, of the received optical signal (E_{Rx}) based on the differential signal (V_{Rx,cm}, i_{x,avg-}i_{y,avg}, i_{b}); obtaining a sum signal (V_{Rx,diff}) related to an addition (iₓ+i_{y}) of the electrical signals (iₓ, i_{y}); providing the sum signal (V_{Rx,diff}) for further processing to obtain data embedded in the received optical signal, based on an intensity of the received optical signal (E_{Rx}).

According to the example embodiments, it is possible to detect the polarization of an incoming IM/DD modulated signal while minimizing the impact on the receiver sensitivity. The polarization can be sensed with high accuracy and sufficiently high bandwidth to allow detection of very fast polarization events. Furthermore, the complexity and cost can be minimized. The optical sensing does not interfere with the normal operation of the receiver, i.e. the PON communication channel can be kept available at all times.

### Brief description of the figures

For a more complete understanding of example embodiments of the present invention, reference is now made to the following descriptions taken in connection with the accompanying drawings in which:
Figure 1 shows a schematic block diagram of an apparatus 200 according to an example embodiment;
Figure 2 shows a schematic diagram of an apparatus 201 according to another example embodiment;
Figures 3 shows a schematic diagram of an apparatus 202 according to another example embodiment;
Figures 4 shows a schematic diagram of an apparatus 203 according to another example embodiment;
Figure 5 shows a schematic diagram of an apparatus 204 according to another example embodiment;
Figure 6 shows a schematic diagram of an apparatus 205 according to another example embodiment;
Figure 7 shows a schematic diagram of an apparatus 206 according to another example embodiment;
Figure 8 shows a flow diagram according to example methods implementing various embodiments.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

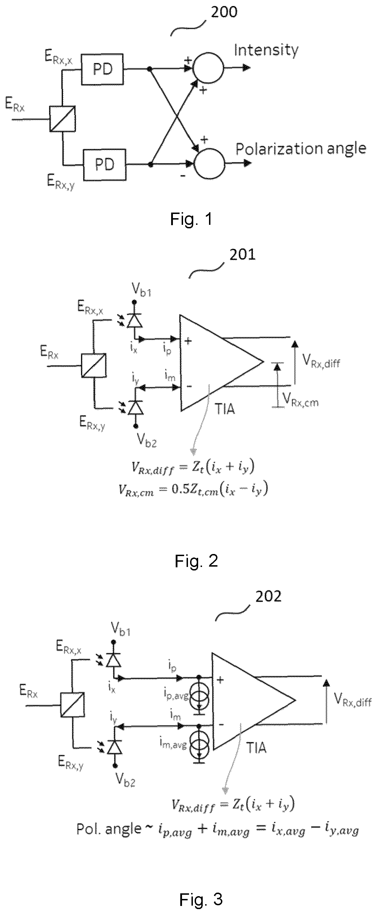

Figure 1 shows a schematic block diagram of an apparatus 200 according to an example embodiment.

The apparatus 200 is suitable for use by an optical receiver. In the example of Figure 1, the apparatus 200 may be implemented in the optical receiver as part of the optical receiver. In another example, the apparatus 200 may be implemented outside the optical receiver and coupled to the optical receiver in an appropriate manner. The optical receiver may be implemented on the Optical Line Terminal (OLT) side or on the Optical Network Unit (ONU) side.

For simplicity, only part of the optical receiver is shown in the Figure 1. A skilled person should understand that the optical receiver may comprise further hardware and/or function blocks for its operation.

As shown in Figure 1, the apparatus 200 comprises for example a polarization splitter for splitting a received optical signal E_{Rx} onto two polarizations, thereby obtaining optical signals E_{Rx,x}, E_{Rx,y} on respective polarizations x, y.

In one embodiment, the received optical signal E_{Rx} is an intensity modulated data signal.

The apparatus 200 further comprises for example two photodiodes PD which are respectively illuminated the optical signals E_{Rx,x}, E_{Rx,y} on respective polarizations x, y. The photodiodes PD may convert the optical signals E_{Rx,x}, E_{Rx,y} into electrical signals iₓ, i_{y} indicating an intensity of the optical signals E_{Rx,x}, E_{Rx,y} on respective polarizations x, y.

The apparatus 200 may obtain the electrical signals indicating the intensity of the optical signals E_{Rx,x}, E_{Rx,y} on respective polarizations x, y in other ways. With the development of the technique, there may be other means suitable to convert the optical signals into electrical signals. The electrical signal is not limited to current, it can also be for example voltage, or digital signal. In another example, high speed analog-digital converter (ADC) may be used to convert the photocurrent of the PDs into digital signals. Therefore, the electrical signals that indicate the intensity of the optical signal E_{Rx,x}, E_{Rx,y} may also be digital signals.

For a simple analysis, it is assumed that a single polarization is transmitted. The transmitted field *Eₜₓ* is an x-polarized signal: 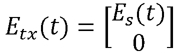 with *Eₛ* being the signal field with intensity modulated data. The optical power is given by:

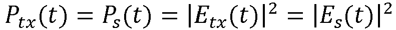

In this case, the data is encoded in the optical power, but the electrical field analysis is required to account for the fiber effects.

If Polarization Mode Dispersion (PMD) is neglected and polarization rotation is assumed to be due to the fiber channel, then the received field is a rotated version of the transmitted field: 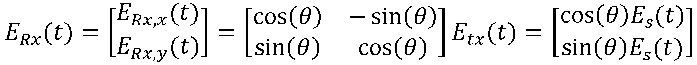 with *θ* being the polarization rotation angle applied by the fiber. *θ* is time-dependent, the time dependency has been omitted to enhance the readability. The received photocurrent *iₓ* and *i_{y}* are thus: ${i}_{x} \left(t\right) = {R}_{pd} {\left|{E}_{Rx , x}\left(t\right)\right|}^{2} = {R}_{pd} {cos}^{2} \left(θ\right) {\left|{E}_{s}\left(t\right)\right|}^{2} = {R}_{pd} {cos}^{2} \left(θ\right) {P}_{s} \left(t\right)$ ${i}_{y} \left(t\right) = {R}_{pd} {\left|{E}_{Rx , y}\left(t\right)\right|}^{2} = {R}_{pd} {sin}^{2} \left(θ\right) {\left|{E}_{s}\left(t\right)\right|}^{2} = {R}_{pd} {sin}^{2} \left(θ\right) {P}_{s} \left(t\right)$
with *R_{pd}* being the photodiode responsivity.

The apparatus 200 is further configured to obtain a differential signal related to a difference iₓ-i_{y} between the electrical signals iₓ, i_{y}.

The differential signal may be obtained either through analog circuits or in the digital domain. Various analog circuits will be elaborated later based on Figures 2-7.

The difference iₓ-i_{y} between the electrical signals iₓ, i_{y}. ${i}_{x} - {i}_{y} = {R}_{pd} \left({cos}^{2}\left(θ\right)-{sin}^{2}\left(θ\right)\right) {P}_{s} \left(t\right) = {R}_{pd} cos \left(2θ\right) {P}_{s} \left(t\right)$
contains information on the received polarization angle θ.

The difference iₓ-i_{y} also contains *Pₛ*. Through averaging, the impact of the fast varying *Pₛ* (with the data) may be removed such that *θ* can be easily measured.

The apparatus is further configured to determine at least part of a state-of-polarization, SOP, of the received optical signal E_{Rx} based on the differential signal.

In one embodiment, the SOP or at least part of the SOP may be represented by at least one of: Stokes parameters, Jones vector, and Mueller matrix.

Although not shown in Figure 1, the apparatus 200 may be further configured to perform a low pass filtering on the differential signal before determining the SOP.

The apparatus is further configured to obtain a sum signal related to an addition iₓ+i_{y} of the electrical signals iₓ, i_{y}.

Similarly, the sum signal may be obtained either through analog circuits or in the digital domain. Various analog circuits will be elaborated later based on Figures 2-7.

The addition iₓ+i_{y} of the electrical signals iₓ, i_{y}: ${i}_{x} \left(t\right) + {i}_{y} \left(t\right) = {R}_{pd} \left({cos}^{2}\left(θ\right)+{sin}^{2}\left(θ\right)\right) {P}_{s} \left(t\right) = {R}_{pd} {P}_{s} \left(t\right)$
is independent of the received polarization.

The apparatus is further configured to provide the sum signal for further processing to obtain data embedded in the received optical signal, based on an intensity of the received optical signal E_{Rx}.

The further processing may comprise: ADC, Digital Signal Processing (DSP) etc, for recovering the data embedded in the received optical signal. A skilled person should know various ways of obtaining data embedded in the received optical signal based on the intensity of the received optical signal E_{Rx}. Thus, it will not be further elaborated here.

Although not shown in Figure 1, the apparatus 200 may comprise further function blocks for determining the SOP and/or performing the further processing.

The apparatus 200 allows receiving IM/DD signals irrespective of the polarization of the received signal and meanwhile allows to sense the polarization of the received signal with high accuracy and high bandwidth.

Prior art teaches to tap of part of the optical signal before the receiver and use the tapped part for polarization sensing using a polarization sensor (e.g. a polarimeter). Although this is a very effective technique, there is a tradeoff in sensitivities: the polarization sensor needs a certain optical power for good operation, but this power does not reach the receiver and hence worsens the performance.

The apparatus 200 does not require an optical tap to sense the polarization, so there is no sensitivity tradeoff between the signal reception and the sensing.

Meanwhile, the apparatus 200 allows sensitive polarization sensing, as *iₓ* -*i_{y}* varies very strongly with the incoming polarization. This may allow more accurate measurements and/or faster measurement. The latter may allow measuring the polarization angle of a (short) burst in PON upstream.

Moreover, the apparatus 200 does not require any specialized optical polarization management, like optical polarization rotators with a loss or tracking speed trade-off.

Figure 2 shows a schematic diagram of an apparatus 201 according to another example embodiment.

In the example shown in Figure 2, two photodiodes are respectively connected to the bias voltage sources V_{b1} and V_{b2}.

The apparatus 201 may be further configured to cause the electrical signals iₓ, i_{y} to be connected in mutually opposite directions to a positive input port iₚ and a negative input port iₘ of a differential Transimpedance Amplifier, TIA.

Specifically, the differential TIA has the following input-output characteristic for the differential mode: ${V}_{Rx , diff} \left(t\right) = {Z}_{t} \left({i}_{p}\left(t\right)-{i}_{m}\left(t\right)\right)$ with the currents annotated in Figure 2, namely, *iₘ*(*t*) and *iₚ*(*t*) are in opposite directions: ${i}_{p} \left(t\right) = {i}_{x} \left(t\right) .$ ${i}_{m} \left(t\right) = - {i}_{y} \left(t\right)$ it can be obtained: ${V}_{Rx , diff} \left(t\right) = {Z}_{t} \left({i}_{x}\left(t\right)+{i}_{y}\left(t\right)\right) = {Z}_{t} {R}_{pd} \left({cos}^{2}\left(θ\right)+{sin}^{2}\left(θ\right)\right) {P}_{s} \left(t\right) = {Z}_{t} {R}_{pd} {P}_{s} \left(t\right)$ with *Zₜ* being the transimpedance of the TIA. Thus, the differential output signal is independent of the received polarization.

Normally, the differential TIA amplifies the difference between the signal inputs of the positive and negative input port. Since the electrical signals iₓ, i_{y} are connected in mutually opposite directions to the positive input port iₚ and the negative input port iₘ of the differential TIA, the differential TIA actually amplifies the addition iₓ+i_{y} of the electrical signals iₓ, i_{y}. Thereby, the apparatus 201 may obtain the sum signal at the differential output V_{Rx,diff} of the differential TIA.

In another example, the differential TIA in Figure 2 can be replaced by two single ended amplifiers, that realize the same input-output characteristics as a differential TIA, which may be called pseudo differential TIA.

In the example shown in Figure 2, the apparatus 201 may be further configured to obtain the differential signal related to the difference iₓ-i_{y} between the electrical signals iₓ, i_{y} from the differential TIA.

Specifically, the apparatus 201 may obtain the differential signal based on a common mode output V_{Rx, cm} of the differential TIA;

More specifically, the TIA in the example of Figure 2 may have a common mode output. It may have the following input-output characteristic for the common mode: ${V}_{Rx , cm} \left(t\right) = 0.5 ∗ {Z}_{t , cm} \left({i}_{p}\left(t\right)+{i}_{m}\left(t\right)\right)$

Thus, with the currents annotated in Figure 2, it can be obtained: VRx,cm(t) = Zt,cm0.5(ix - iy) = 0.5Zt,cmRpd(cos2(θ) - sin2(θ))Ps(t) = 0.5Zt,cmRpd cos(2θ)Ps (t)
with *Z_{t,cm}* the common mode transimpedance. Thus, the common mode output contains information on the received polarization angle *θ*.

Various embodiments avoid complex and costly implementations. Additionally, various embodiments allow simplified integration on Silicon Photonics on which the Polarization Beam Splitter (PBS) is inherently present by using 2D grating coupler that is used for coupling the signal onto the Photonic Integrated Circuit (PIC) while at the same time performing polarization beam splitting. Various embodiments might enable the reception of (differentially) encoded dual-polarization IM/DD signals in order to increase the throughput in PON links.

Figure 3 shows a schematic diagram of an apparatus 202 according to another example embodiment.

The components similar or same as those described with respect to Figure 2 will not be repeated.

Typical differential TIA designs will suppress the common-mode. In the example shown in Figure, 3, the differential TIA may not have the common mode characteristic as described with respect to Figure 2.

However, every TIA will have to correct the average photocurrent from the photodiodes at the input. The corrected photocurrents can be used to calculate the received polarization.

Although the current source used to correct the average photocurrent is shown outside the differential TIA in Figure 3, a skilled person should understand this current source may be implemented inside the TIA.

In the example shown in Figure 3, the apparatus 202 may be further configured to obtain a low frequency component i_{m,avg}, i_{p,avg} of the respective input signals iₘ, iₚ from the differential TIA, and to obtain the differential signal i_{x,avg}-i_{y,avg} based on the low frequency component i_{m,avg}, i_{p,avg} from the differential TIA, for example i_{x,avg}-i_{y,avg} *=* i_{p,avg} + i_{m,avg}.

Thereby, the apparatus 202 can still obtain the differential signal i_{x,avg}-i_{y,avg} from the differential TIA.

The sensing speed is limited by the feedback loops that control these current sources. Typically, this is a few MHz, which is still fast enough for most polarization events.

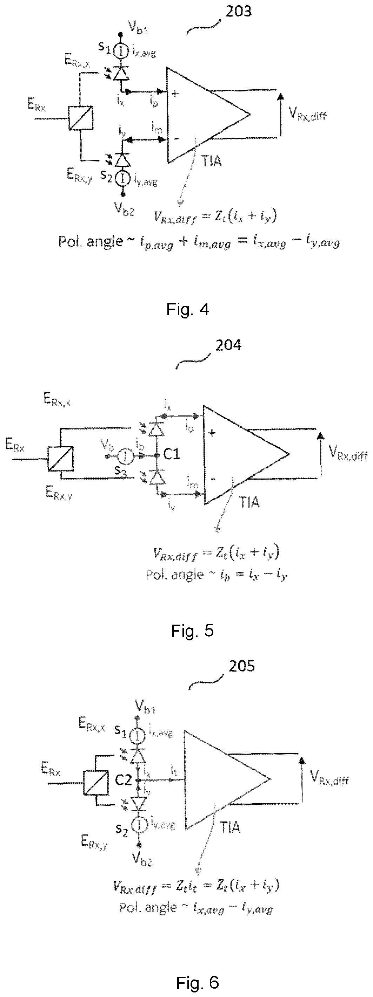

Figure 4 shows a schematic diagram of an apparatus 203 according to another example embodiment.

The components similar or same as those described with respect to Figures 2 and 3 will not be repeated.

Comparing to example shown in Figure 3, instead of relying on the current source of the TIA for the low frequency component of respective electrical signals, a first current sensor s₁ and a second current sensor s₂ are used to measure the bias current of the photodiodes at their bias voltage sources *V*_{*b*1}, *V_{b2}* respectively in the example shown in Figure 4. This also allows polarization sensing without intervention to the TIA.

In the example shown in Figure 4, the apparatus 203 may be further configured to obtain low frequency components i_{x,avg}, i_{y,avg} of the respective electrical signals iₓ, i_{y} respectively from the first current sensor s₁ and the second current sensor s₂, and to obtain the differential signal i_{x,avg}-i_{y,avg} based on the low frequency components i_{x,avg}, i_{y,avg} obtained from the first and second current sensors s₁, s₂.

In the example shown in Figure 4, the first current sensor s₁ and the second current sensor s₂ are respectively connected between the bias voltage source V_{b1}, V_{b2} and the photodiodes.

In other examples, the first current sensor s₁ and the second current sensor s₂ may be configured at other places in series connection with the PDs respectively.

The apparatus 203 may comprise a further function block (not shown in Figure 4) configure to receive readings from the first current sensor s₁ and the second current sensor s₂, and to determine the differential signal i_{x,avg}-i_{y,avg} based on the readings.

Figure 5 shows a schematic diagram of an apparatus 204 according to another example embodiment.

The components similar or same as those described with respect to Figures 2-4 will not be repeated.

In the example shown in Figure 5, the two photodiodes are connected to a common bias voltage source V_{b}.

Specifically, the apparatus 204 may be further configured to cause the electrical signals iₓ, i_{y} to flow respectively into and from a first common node C1, and to obtain the differential signal i_{b}= iₓ-i_{y} from a third current sensor s₃ configured to measure a low frequency component of a signal flowing to the first common node C1.

More specifically, by connecting the photocurrent from the two photodiodes in mutually opposite directions to a common node C1, one photocurrent can be easily subtracted from the other. The third current sensor s₃ may be configured in series connection with the first common node C1. In the example shown in Figure 5, the third current sensor s₃ is configured between the common bias voltage source V_{b} and the first common node C1. The difference i_{b}=iₓ-i_{y} between the electrical signals iₓ, i_{y} can be easily obtained from the third current sensor s₃. The differential TIA is used to detect the intensity while current sensing at the bias voltage V_{b} is required for the polarization sensing.

Figure 6 shows a schematic diagram of an apparatus 205 according to another example embodiment.

The components similar or same as those described with respect to Figures 2 -5 will not be repeated.

In the example shown in Figure 6, a further TIA with single input port is used instead of the differential TIA in Figures 2-5. In this case, the further TIA can only detect the intensity. Current sensors s₁, s₂ on both bias voltages V_{b1} and V_{b2} are required to obtain the low frequency components i_{x,avg}, i_{y,avg} of the respective electrical signals iₓ, i_{y}. The differential signal i_{x,avg}-i_{y,avg} may be determined based on the low frequency components i_{x,avg}, i_{y,avg}, and provided to further function blocks for determining at least part of the SOP.

The apparatus 205 may be further configured to provide the addition iₓ+i_{y} of the electrical signals iₓ, i_{y} to the input port it of the further TIA with single input port; and to obtain the sum signal V_{Rx,diff} from an output of the further TIA.

Specifically, photocurrent from the photodiodes can be easily added together by connecting them in same direction to a second common node C2. The common node C2 is connected to the input port of the further TIA, causing the electrical signals iₓ, i_{y} to flow both into input port of the further TIA.

The further TIA with single input port may amplify the input the input signal iₓ+i_{y}, and obtain the sum signal at the output port of the further TIA as:
${V}_{Rx , diff} = {Z}_{i} {i}_{t} = {Z}_{t} \left({i}_{x}+{i}_{y}\right)$

Alternative embodiments may be obtained by reversing the polarity of both photodiodes in Figures 2-6.

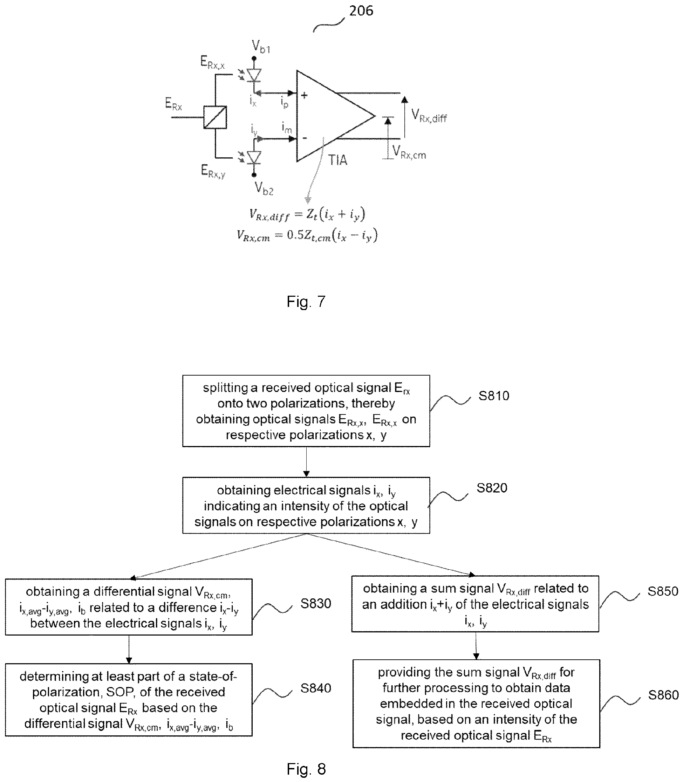

Figure 7 shows a schematic diagram of an apparatus 206 according to another example embodiment.

The example shown in Figure 7 is similar as the example shown in Figure 2. The difference is that the polarity of both photodiodes is reversed.

Comparing to Figure 2, the direction of the current to the positive input port iₚ and negative input port iₘ is reversed in Figure 7.

Since changing the directions of both PDs is equivalent to inverting the currents, i_{PD} is replaced by -i_{PD}. Inverting both PDs inverts the output of the differential TIA and results in -V_{Rx,diff} and - V_{Rx,cm} at the output of the differential TIA. For V_{Rx, diff} this inversion just swaps 1's with 0's, which can be solved later on by swapping the differential output lines again. Hence the swap is known/compensated in the system. Therefore, the direction of the current is not considered as relevant.

For simplicity, examples reversing the polarity of both photodiodes in the examples shown in figures 3-6 will not be further elaborated here.

Figure 8 shows a flow diagram according to example methods implementing various embodiments.

In the example of Figure 8, all method steps may be implemented in the apparatus 200, 201, 202, 203, 204, 205, and 206 inside the optical receiver. Alternatively, some of the method steps may be implemented by the optical receiver, and some of the method steps may be implemented for example in the apparatus 200, 201, 202, 203, 204, 205 and 206 outside the optical receiver and connected to the optical receiver. The optical receiver may be implemented at an ONU or at an OLT.

In Figure 8, in step S810, the method starts with splitting a received optical signal E_{Rx} onto two polarizations, thereby obtaining optical signals E_{Rx,x}, E_{Rx,y} on respective polarizations x, y.

In step S820, the method continues with obtaining electrical signals iₓ, i_{y} indicating an intensity of the optical signals on respective polarizations x, y.

In step S830, the method continues with obtaining a differential signal related to a difference iₓ-i_{y} between the electrical signals iₓ, i_{y}.

In step S840, the method continues with determining at least part of a state-of-polarization, SOP, of the received optical signal E_{Rx} based on the differential signal.

In parallel to the steps S830 and S840, , the method continues in step S850 with obtaining a sum signal related to an addition iₓ+i_{y} of the electrical signals iₓ, i_{y}.

In step S860, the method continues with providing the sum signal for further processing to obtain data embedded in the received optical signal, based on an intensity of the received optical signal E_{Rx}.

In another embodiment, the steps S850 and S860 may be performed before or after the steps S830 and S840.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

It will be obvious to a person skilled in the art that, as the technology advances, the inventive concept can be implemented in various ways. The invention and its embodiments are not limited to the examples described above but may vary within the scope of the claims.

## Claims

1. An apparatus (200, 201, 202, 203, 204, 205, 206) for use by an optical receiver, comprising means for:
- splitting a received optical signal (E_{Rx}) onto two polarizations, thereby obtaining optical signals (E_{Rx,x}, E_{Rx,y}) on respective polarizations (x, y),
- obtaining electrical signals (iₓ, i_{y}) indicating an intensity of the optical signals on respective polarizations (x, y);
- obtaining a differential signal (V_{Rx,cm}, i_{x,avg-}i_{y,avg}, i_{b}) related to a difference (iₓ-i_{y}) between the electrical signals (iₓ, i_{y});
- determining at least part of a state-of-polarization, SOP, of the received optical signal (E_{Rx}) based on the differential signal (V_{Rx,cm}, i_{x,avg-}i_{y,avg}, i_{b});
- obtaining a sum signal (V_{Rx,diff}) related to an addition (iₓ+i_{y}) of the electrical signals (iₓ, i_{y});
- providing the sum signal (V_{Rx,diff}) for further processing to obtain data embedded in the received optical signal, based on an intensity of the received optical signal (E_{Rx}).

2. The apparatus (200, 201, 202, 203, 204, 205, 206) according to claim 1, wherein the received optical signal (E_{Rx}) is an intensity modulated data signal.

3. The apparatus (200, 201, 202, 203, 204, 205, 206) according to any preceding claim, wherein at least part of the SOP is represented by at least one of: Stokes parameters, Jones vector, and Mueller matrix.

4. The apparatus (201, 202, 203, 204, 206) according to any preceding claim, wherein the means are further configured for:
- causing the electrical signals (iₓ, i_{y}) to be connected in mutually opposite directions to a positive input port (iₚ) and a negative input port (iₘ) of a differential or pseudo differential Transimpedance Amplifier, TIA.

5. The apparatus (201, 202, 203, 204, 206) according to the preceding claim, wherein the means are further configured for:
- obtaining the sum signal (V_{Rx,diff}) at a differential output of the differential or pseudo differential TIA.

6. The apparatus (201, 202, 206) according to any of claims 4-5, wherein the means are further configured for:
- obtaining the differential signal (V_{Rx,cm}, i_{x,avg}-i_{y,avg}) from the differential or pseudo differential TIA.

7. The apparatus (201, 206) according to the preceding claim, wherein the means are further configured for:
- obtaining the differential signal (V_{Rx, cm}) based on a common mode output of the differential or pseudo differential TIA.

8. The apparatus (202) according to any of claims 4-6, wherein the means are further configured for:
- obtaining a low frequency component (i_{m,avg}, i_{p,avg}) of the respective input signals (iₘ, iₚ) from the differential or pseudo differential TIA;
- obtaining the differential signal (i_{x,avg}-i_{y,avg}) based on the low frequency component (i_{m,avg}, i_{p,avg}) from the differential or pseudo differential TIA.

9. The apparatus (203, 205) according to the any of claims 1-5, wherein the means are further configured for:
- obtaining low frequency components (i_{x,avg}, i_{y,avg}) of the respective electrical signals (iₓ, i_{y}) respectively from a first current sensor and a second current sensor;
- obtaining the differential signal (i_{x,avg}-i_{y,avg}) based on the low frequency components (i_{x,avg}, i_{y,avg}) obtained from the first and second current sensors.

10. The apparatus (204) according to claim 4 or 5, wherein the means are further configured for:
- causing the electrical signals (iₓ, i_{y}) to flow respectively into and from a first common node (C1),
- obtaining the differential signal (i_{b}) from a third current sensor configured to measure a low frequency component of a signal flowing to the first common node (C1).

11. The apparatus (205) according to any of claims 1-3, wherein the means are further configured for:
- providing the addition (iₓ+i_{y}) of the electrical signals (iₓ, i_{y}) to an input port (it) of a further TIA with single input port; and
- obtaining the sum signal (V_{Rx,diff}) from an output of the further TIA.

12. The apparatus (200, 201, 202, 203, 204, 205, 206) according to any preceding claim, wherein the means are further configured for:
- performing a low pass filtering on the differential signal (V_{Rx,cm}, i_{x,avg-}i_{y,avg}, i_{b}) before determining the SOP.

13. The apparatus (200, 201, 202, 203, 204, 205, 206) according to any preceding claim, wherein the means are further configured for:
- obtaining the electrical signals (iₓ, i_{y}; uₓ, u_{y}) by illuminating two photodiodes respectively with the optical signals (E_{Rx,x}, E_{Rx,y}) on respective polarizations (x, y).

14. The apparatus (200, 201, 202, 203, 204, 205, 206) according to any preceding claim, wherein the optical receiver is implemented at an Optical Line Terminal, OLT or at an Optical Network Unit, ONU.

15. A method, comprising:
- splitting a received optical signal (E_{Rx}) onto two polarizations, thereby obtaining optical signals (E_{Rx,x}, E_{Rx,y}) on respective polarizations (x, y),
- obtaining electrical signals (iₓ, i_{y}) indicating an intensity of the optical signals on respective polarizations (x, y);
- obtaining a differential signal (V_{Rx,cm}, i_{x,avg-}i_{y,avg}, i_{b}) related to a difference (iₓ-i_{y}) between the electrical signals (iₓ, i_{y});
- determining at least part of a state-of-polarization, SOP, of the received optical signal (E_{Rx}) based on the differential signal (V_{Rx,cm}, i_{x,avg-}i_{y,avg}, i_{b});
- obtaining a sum signal (V_{Rx,diff}) related to an addition (iₓ+i_{y}) of the electrical signals (iₓ, i_{y});
- providing the sum signal (V_{Rx,diff}) for further processing to obtain data embedded in the received optical signal, based on an intensity of the received optical signal (E_{Rx}).
